# EUROPÄISCHE PATENTSCHRIFT

(11) **EP 3 561 404 B1**
(45) Veröffentlichungstag und Bekanntmachung des Hinweises auf die Patenterteilung: **17.11.2021**
(21) Anmeldenummer: 19169599.8
(22) Anmeldetag: 16.04.2019
(51) Int. Cl.: F24F 7/00, F24F 13/02, G01M 3/26, G01M 3/32, F24F 7/013

(54) **LÜFTER-SET MIT EINEM LÜFTERROHR, MEHREREN LÜFTERBAUTEILEN UND EINER SIMULATIONSBLENDE UND VERFAHREN ZUR DICHTHEITSMESSUNG EINES GEBÄUDES**
VENTILATOR SET WITH VENTILATION PIPE, MULTIPLE VENTILATOR COMPONENTS AND A SIMULATION ORIFICE AND METHOD FOR MEASURING THE TIGHTNESS OF A BUILDING
ENSEMBLE DE VENTILATEUR DOTÉ D'UN TUBE DE VENTILATEUR, D'UNE PLURALITÉ DE COMPOSANTS DE VENTILATEUR ET D'UN ORIFICE DE SIMULATION ET PROCÉDÉ DE MESURE D'ÉTANCHÉITÉ D'UN BÂTIMENT

(30) Priorität: 27.04.2018 DE 102018110262
(43) Veröffentlichungstag der Anmeldung: 30.10.2019
(73) Patentinhaber: Schütze, Erik, 07743 Jena (DE); Schaller, Robert, 07768 Kahla (DE)
(72) Erfinder: SCHÜTZE, Erik, 07743 Jena (DE); SCHALLER, Robert, 07768 Kahla (DE); KIND, Steffen, 07749 Jena (DE)
(74) Vertreter: Schaller, Renate

(56) Entgegenhaltungen:
- WO-A1-02/04912
- WO-A1-2016/129997
- GB-A- 2 189 023
- "Thermal performance of buildings - determination of air permeability of buildings - fan pressuriztion method.", ISO 9972, 1. Mai 2006 (2006-05-01), XP055203280, Gefunden im Internet: URL:http://mosenergoconsult.ru/wp-content/ uploads/2014/01/ISO-9972-2006-EN.pdf [gefunden am 2015-07-17]

## Beschreibung

Um Gebäude, Bereiche von Gebäuden oder Räume (nachfolgend Gebäude) auf ihre Luftdichtheit zu prüfen, werden in der Regel in unterschiedlichen Bauzuständen des Gebäudes Dichtheitsmessungen, auch Blower-Door-Tests genannt (Blower Door ist eine eingetragene Marke), durchgeführt, wobei aus den dabei erhaltenen Messwerten jeweils ein Dichtheitswert für das Gebäude ermittelt wird, der mit einem vorgegebenen Grenzwert verglichen wird, um eine Aussage treffen zu können, ob das Gebäude im betreffenden Bauzustand ausreichend dicht ist.

Nach geltenden Baugesetzen, der Energieeinsparverordnung und der DIN-Vorschrift 4108-07 beträgt der vorgegebene n₅₀-Grenzwert (Dichtheitsgrenzwert) für ein Gebäude mit einer ventilatorgestützten Lüftungsanlage 1,5/h. Laut der DIN-Vorschrift 4108-7 wird bezüglich der Luftdichtheit von Gebäuden sogar ein noch geringerer n₅₀-Grenzwert in Höhe von 1,0/h gefordert. Ein n₅₀-Grenzwert von z. B. 1,5/h bedeutet, dass bei 50 Pascal Luftdruck (Überdruck oder Unterdruck) die Raumluft im Gebäude innerhalb von einer Stunde 1,5-mal ausgetauscht wird. Zur Durchführung der Dichtheitsmessung wird derzeit in den später beschriebenen zwei Bauzuständen im Inneren des Gebäudes jeweils zum einen ein Unterdruck von 50 Pascal und zum anderen ein Überdruck von 50 Pascal Überdruck eingestellt und jeweils über eine Stunde gehalten. Der sich jeweils dabei einstellende Luftvolumenstrom wird gemessen und dokumentiert. Aus den erhaltenen Messwerten wird bezogen auf das Gebäudevolumen der n₅₀-Wert (Dichtheitswert) abgeleitet.

Liegt der abgeleitete Dichtheitswert oberhalb der entsprechenden Vorgaben oder Sollwerte, so können sich unterschiedliche Folgen für den Eigentümer, den Bauherrn oder den Mieter des Gebäudes ergeben. Energetisch nachteilige Bedingungen, eine Verletzung des Baurechts und/oder zusätzlich bauschadensrelevante Aspekte könnten so aus den Ursachen hervorgehen

Um den Dichtheitswert zu verbessern, das heißt zu senken, werden dann z. B. mit Hilfe einer Wärmebildkamera, eines Nebelgenerators und / oder eines Luftgeschwindigkeitsmessgerätes die Undichtigkeiten (ungewollte Leckagen) am Gebäude aufgespürt und abgedichtet.

Gebäude mit einer ventilatorgestützten Lüftungsanlage, bestehend aus mehreren Lüftereinheiten, jeweils aus einem Lüfterrohr und Lüfterbauteilen oder Lüfterbaugruppen bestehend, weisen zusätzlich zu ungewollten Leckagen durch die Lüftereinheiten funktionsbedingte Leckagen auf. Die Lüfterrohre sind in die Wände des Gebäudes eingelassen bzw. integriert in Wandeinbaumodulen im Gebäude verbaut. Übliche, in das Lüfterrohr eingesetzte Lüfterbauteile oder -baugruppen sind z. B. Leitwerke, Ventilatoren, ein Wärmespeicher, Filtereinheiten und Schalldämmeinsätze. An dem Lüfterrohr bzw. um dessen Rohrenden angesetzte Lüfterbauteile sind eine Innenblende und eine Wetterschutzhaube (Außenhaube). Da es für die Beschreibung der Erfindung nicht relevant ist, soll nachfolgend einheitlich von einzusetzenden bzw. eingesetzten Lüfterbauteilen gesprochen werden, unabhängig davon, ob es sich dabei um ein Lüfterbauteil oder eine Lüfterbaugruppe handelt bzw. um welche Lüfterbauteile oder -baugruppen es sich konkret handelt, und unabhängig davon, ob diese in das Lüfterrohr ein- oder an dem Lüfterrohr angesetzt werden oder sind. Die Anordnung und der Aufbau der Lüfterbauteile kann sich je nach Hersteller, Luftmengenbedarf und Schallschutzanforderungen unterscheiden. Beispielsweise setzen einige Hersteller den Ventilator bezogen auf das Gebäudeinnere vor den Wärmespeicher ein und andere setzen ihn dahinter ein. Die grundlegende Funktion der Lüftereinheiten wird dadurch nicht beeinflusst.

Zur Feststellung der Dichtheit bzw. der Leckagen eines Gebäudes werden die genannten Messungen, wie bereits angeführt, in wenigstens zwei verschiedenen Bauzuständen des Gebäudes durchgeführt.

Der erste dieser Bauzustände ist der Rohbauzustand. In diesem Bauzustand sind in dem Gebäude, das bereits mit Fenstern und Türen ausgestattet ist, die Lüfterrohre bereits in die Wände eingelassen bzw. Wandeinbaumodule mit integrierten Lüfterrohren sind im Gebäude verbaut. Die noch leeren Lüfterrohre werden abgedichtet. Der Dichtheitswert, welcher sich mit dem oben beschriebenen Messverfahren, das in diesem Bauzustand und mit abgedichteten Lüfterrohren B-Messung genannt wird, ergibt, ist auf Leckagen zurückzuführen, die nicht durch die Lüftungsanlage verursacht sind, und sollte deutlich unter dem geforderten Dichtheitsgrenzwert liegen. Liegt er höher, so müssen Maßnahmen getroffen werden, um die Dichtheit des Gebäudes zu verbessern. Geht man davon aus, dass bei einer Grundfläche eines Gebäudes von ca. 140 m² etwa 6 bis 8 Lüftereinheiten verbaut werden, können das bei einem großen Gebäude schnell um die 100 Lüftereinheiten sein, deren Lüfterrohre zur Durchführung der B-Messungen abgedichtet werden müssen.

Die Abdichtung erfolgt gemäß dem Stand der Technik mit jeweils einem das Lüfterrohr vollständig abdichtenden Rohrverschluss. Aus der Praxis sind hierfür an oder in das leere Lüfterrohr an- oder eingesetzte Deckel oder Ballons, die in das Lüfterrohr eingeführt und dann aufgeblasen werden, bekannt. Oft wird das Lüfterrohr auch nur mit einer Folie abgeklebt. Entsprechende Vorgaben zu den Abdichtungen gibt es nicht.

Vorteilhaft belässt man nach der B-Messung den Rohrverschluss im Lüfterrohr, bis zu einem in der Regel zeitlich wesentlich späteren Bauzustand, bei dem die Lüfterbauteile in die Lüfterrohre eingesetzt werden, und schützt damit auch die Verschmutzung der Lüfterrohre während der Baumaßnahmen.

Der Nutzungszustand ist der zweite der Bauzustände, in dem die genannten Messungen durchgeführt werden. In diesem Bauzustand sind die Lüftereinheiten komplett, das heißt die Lüfterbauteile sind in die Lüfterrohre eingebaut. Der Dichtheitswert, welcher sich bei der Durchführung des Messverfahrens, in diesem Bauzustand, A-Messung genannt, ergibt, ist auf alle Leckagen (unerwünschte Undichtheit) des Gebäudes, aber auch auf die funktionsbedingt notwendige Undichtheit der Lüftereinheiten zurückzuführen und darf einen geforderten Dichtheitsgrenzwert nicht überschreiten.

Es werden in der Praxis im besten Fall drei Messungen in Bezug auf die Gebäudedichtheit durchgeführt. Nach der ersten Messung während der Bauphase, im Rohbauzustand, und der zweiten Messung im Nutzungszustand, das heißt, wenn das Gebäude mit seinen technischen Anlagen fertig gestellt ist und gegebenenfalls sogar schon benutzt und bewohnt wird, findet eine nicht weniger bedeutende dritte Messung, in wenigen Fällen kurz vor Ablauf der Gewährleistung statt. Hierbei werden sämtliche an der Gebäudehülle (luftdichte Ebene) tangierende Gewerke noch einmal auf ihre Dichtheit geprüft, um etwaige Ansprüche zu sichern und gegebenenfalls Baumängel bzw. Bauschäden zu lokalisieren.

Es ist von Nachteil, dass die Messergebnisse, die vor und nach der Komplettierung der Lüftereinheiten gewonnen werden, nicht miteinander vergleichbar sind. Ein vor der Komplettierung für das Gebäude gemessener Dichtheitswert, bei dem die leeren Lüfterrohre abgedichtet sind, ist ausschließlich bestimmt durch ungewünschte Leckagen. Diese durch geplante oder zusätzlich bautechnische Maßnahmen nur so weit zu reduzieren, dass der Dichtheitswert nach Komplettierung der Lüftereinheiten nur knapp unter einem geforderten Dichtheitsgrenzwert liegt, ist nicht möglich, da der Einfluss der Lüftereinheiten auf den Dichtheitswert des Gebäudes zu diesem Zeitpunkt unberücksichtigt bleibt. Insbesondere aus ökonomischen Gründen besteht ein Interesse daran, das Gebäude nur soweit abzudichten, dass ein geforderter Dichtheitswert lediglich nicht überschritten wird. Es ist nicht das Anliegen, dass der Dichtheitswert für ein fertiggestelltes Gebäude so gering wie möglich ist. Er braucht nur so gering wie nötig zu sein.

Das Dokument GB 2 189 023 A offenbart ein Lüfter-Set, enthaltend ein Lüfterrohr, mehrere Lüfterbauteile, die in das leere Lüfterrohr eingesetzt oder an dem Lüfterrohr angesetzt werden können, um mit dem Lüfterrohr eine Lüftereinheit zu bilden.

Das Dokument "Thermal performance of buildings - determination of air permeability of buildings - fan pressuriztion method", ISO 9972, 1. Mai 2006 offenbart ein Verfahren zur Dichtheitsmessung eines Gebäudes in verschiedenen Bauzuständen, bei dem im dem Gebäude über eine vorgegebene Zeit ein vorgegebener Überdruck oder Unterdruck erzeugt wird, der sich dabei einstellende Luftvolumenstrom aus dem Gebäude oder in das Gebäude gemessen wird und aus dem gemessenen Luftvolumenstrom ein Dichtheitswert für das Gebäude in dem jeweiligen Bauzustand abgeleitet wird.

Es ist die Aufgabe der Erfindung, eine Lösung zu finden, mit welcher in die Dichtheitsmessungen eines Gebäudes, unabhängig von dessen Bauzustand während der Dichtheitsmessung die technisch bedingte Undichtheit (gewollte Leckage) von Lüftereinheiten einfließt, um die Messergebnisse untereinander vergleichbar zu machen.

Diese Aufgabe wird mit einem Lüfter-Set mit den Merkmalen des Anspruches 1 gelöst. Vorteilhafte Ausführungen sind in den rückbezogenen Ansprüchen 2 bis 8 angegeben. Die Aufgabe wird auch mit einem Lüfter-Set gemäß einem der Ansprüche 1-8, gemäß Anspruch 9 verwendet, gelöst.

Des Weiteren wird diese Aufgabe mit einem Verfahren gemäß Anspruch 10 gelöst.

Es ist erfindungswesentlich, dass das Lüfter-Set, zusätzlich zu einem Lüfterrohr, das in ein Gebäude während der Herstellung des Rohbaus eingebaut wird, und Lüfterbauteilen, mit denen das Lüfterrohr vor Fertigstellung des Nutzungszustandes des Gebäudes zu einer Lüftereinheit komplettiert wird, eine Simulationsblende aufweist. Mit der Simulationsblende kann das Lüfterrohr, alternativ zu einer Lüftereinheit, zu einem Simulator komplettiert werden, der einen gleichen Strömungswiderstand für eine hindurchtretende Luftströmung (nachfolgend nur Strömungswiderstand) aufweist, wie ihn die Lüftereinheit hat, womit bei Messungen vor Fertigstellung des Nutzungszustandes der Strömungswiderstand der später eingesetzten Lüfterbauteile im Lüfterrohr simuliert wird. Dazu weist die Simulationsblende eine Blendenöffnung auf, die in ihrer Größe so dimensioniert ist, dass die Simulationsblende für eine Luftströmung durch das Lüftungsrohr einen gleichen Strömungswiderstand bildet, wie alle eingesetzten Lüfterbauteile zusammen. Das heißt mit anderen Worten, die Blendenöffnung ist so dimensioniert, dass der durch die Blendenöffnung resultierende Luftvolumenstrom durch den Simulator während der Dichtheitsmessung bei anliegendem Unter- oder Überdruck einem gleichen Luftvolumenstrom entspricht, wie er durch die Lüftereinheit entstehen würde.

Die mit der Simulation erhaltenen Dichtheitswerte können bei der energetischen Betrachtung und Fachplanung für lüftungstechnische Maßnahmen als gemessene Werte in die Berechnung zur Infiltration und Exfiltration in die DIN V18599 einfließen. Die bisherigen Berechnungen, die auf Annahmen beruhen, können jetzt durch echte Messergebnisse ersetzt werden und führen damit zu genaueren Ergebnissen. Zusätzlich werden mit der Anwendung der Simulationsblende bei allen Messungen während des Baugeschehens vergleichbare Ergebnisse reproduziert, die einzig und allein auf die komplette luftdichte Ebene, inklusive der Qualität der Lüftereinheiten selbst zurückzuführen sind.

Die Simulationsblende kann auf vielfältige, dem Fachmann bekannte Weise, z. B. als in das leere Lüfterrohr ein- oder an dieses ansetzbarer Deckel, Folie oder Stopfen, ausgeführt sein. Selbst die Verwendung eines Ballons, der in Form eines Ringes mit einem vorgegebenen Innendruck aufgeblasen eine definierte Blendenöffnung umschließt und über seinen Umfang dicht im Lüfterrohr sitzt, ist vorstellbar. Vorteilhaft ist die Simulationsblende ein billig herstellbarer und leichter Deckel, weshalb in den später beschriebenen Ausführungsbeispielen die Simulationsblende als Deckel ausgeführt dargestellt wird, wobei die dort aufgezeigten unterschiedlich ausgeführten Blendenöffnungen auf alle denkbaren Ausführungen der Simulationsblende übertragbar sind.

Auch ist jegliche bekannte Verbindungstechnik der Simulationsblende an oder in dem Lüfterrohr durch Form-, Kraft- oder Stoffschluss möglich, wobei ein kraftschlüssiges Einpressen oder Aufpressen für eine schnelle Herstellung und Lösung der Verbindung mit dem Lüfterrohr bevorzugt geeignet ist.

Auch kommen grundsätzlich für die Simulationsblende alle Materialien infrage, die auch für herkömmliche Rohrverschlüsse sowie entsprechende Herstellungsverfahren infrage kommen, wobei diese hier nur eine begrenzte Elastizität aufweisen dürfen, sodass sich unter dem bei der Messung angelegten Über- oder Unterdruck die Größe der Blendenöffnung nicht über eine vorgegebene Toleranzgröße hinaus vergrößert. Die Blendenöffnung ist vorteilhaft eine in sich geschlossene Blendenöffnung, kann aber durch mehrere voneinander getrennte Teilöffnungen gebildet sein, die in Summe als eine Blendenöffnung zu verstehen sind.

Für ein Verfahren zur Dichtheitsmessung eines Gebäudes in verschiedenen Bauzuständen, bei dem im dem Gebäude über eine vorgegebene Zeit ein vorgegebener Überdruck oder Unterdruck erzeugt wird, der sich dabei einstellende Luftvolumenstrom aus dem Gebäude oder in das Gebäude gemessen wird und aus dem gemessenen Luftvolumenstrom ein Dichtheitswert für das Gebäude in dem jeweiligen Bauzustand abgeleitet wird, ist es erfindungswesentlich, dass die in dem Gebäude eingebauten noch leeren Lüfterrohre, bevor sie jeweils mit Lüfterbauteilen zu einer Lüftereinheit komplettiert werden, vorübergehend mit einer Simulationsblende zu einem Simulator komplettiert werden. Der Simulator weist einen gleichen Strömungswiderstand für einen hindurchtretenden Luftvolumenstrom auf, wie die Lüftereinheit, womit in verschiedenen Bauzuständen, in denen eine Dichtheitsmessung durchgeführt wird, der durch die Lüfterrohre hindurchtretende Luftvolumenstrom gleich ist.

Die Erfindung soll nachfolgend anhand von Ausführungsbeispielen mit Hilfe von Zeichnungen näher erläutert werden. Hierzu zeigen:
- Fig. 1: ein Lüfter-Set, enthaltend ein Lüfterrohr, eine Simulationsblende und mehrere verschiedene Lüfterbauteile,
- Fig. 2: eine Explosionsdarstellung einer Lüftereinheit, gebildet aus dem Lüfterrohr und den Lüfterbauteilen des Lüfter-Sets nach Fig. 1,
- Fig. 3: eine Explosionsdarstellung eines Simulators, gebildet aus dem Lüfterrohr und der Simulationsblende des Lüfter-Sets nach Fig. 1,
- Fig. 4: ein in eine Wand eingesetztes Lüfterrohr bzw. ein Wandeinbaumodul mit einem integrierten Lüfterrohr,
- Fig. 5: ein erstes Ausführungsbeispiel einer Simulationsblende mit einer permanenten Öffnung als Blendenöffnung,
- Fig. 6: ein zweites Ausführungsbeispiel einer Simulationsblende mit einer Sollöffnung als Blendenöffnung, gebildet durch eine Sollbruchlinie, in einem ersten und einem zweiten Zustand und
- Fig. 7: ein drittes Ausführungsbeispiel einer Simulationsblende mit einer Sollöffnung als Blendenöffnung, gebildet durch eine temporäre Öffnung und einen Verschlussdeckel.

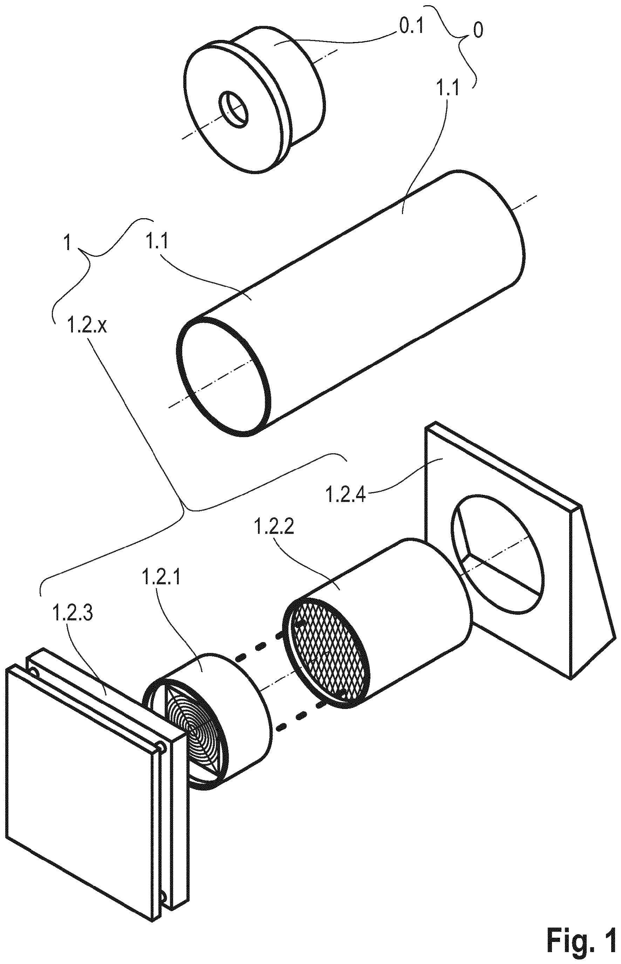

Ein erfindungsgemäßes Lüfter-Set enthält, wie in **Fig. 1** dargestellt, ein Lüfterrohr 1.1, verschiedene Lüfterbauteile 1.2.x, wie z.B. einen Ventilator 1.2.1, einen Wärmespeicher 1.2.2, eine Innenblende 1.2.3 und eine Wetterschutzhaube 1.2.4, sowie eine Simulationsblende 0.1. Als Lüfterbauteile 1.2.x sollen sowohl Lüfterbauteile als auch Lüfterbaugruppen verstanden werden, die in das leere Lüfterrohr 1.1 eingesetzt oder an diesem angesetzt mit dem Lüfterrohr 1.1 eine funktionierende Lüftereinheit 1 bilden. Es ist dem Fachmann bekannt, um welche Lüfterbauteile 1.2.x es sich hier obligatorisch und optional handelt.

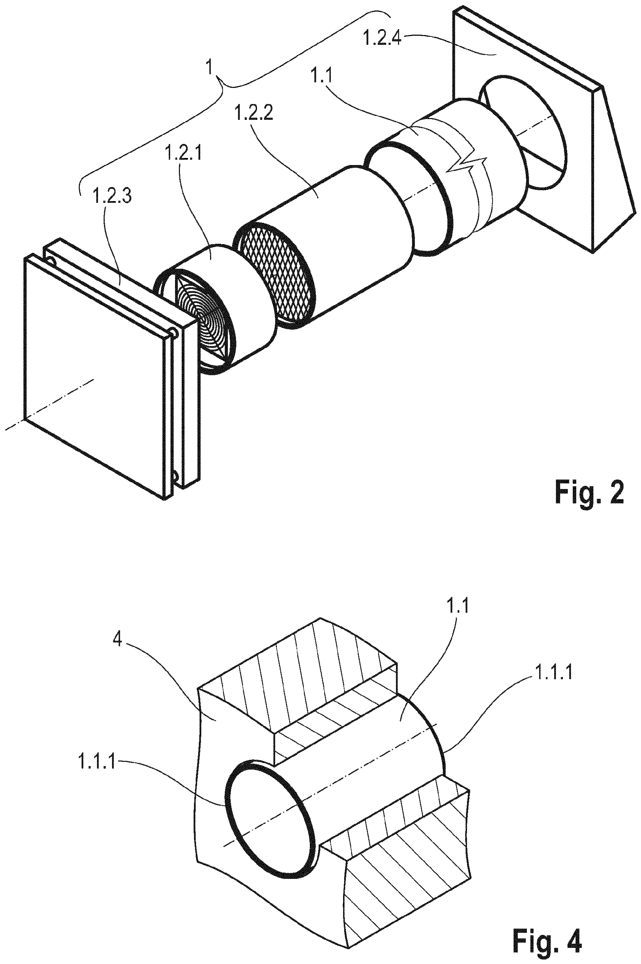

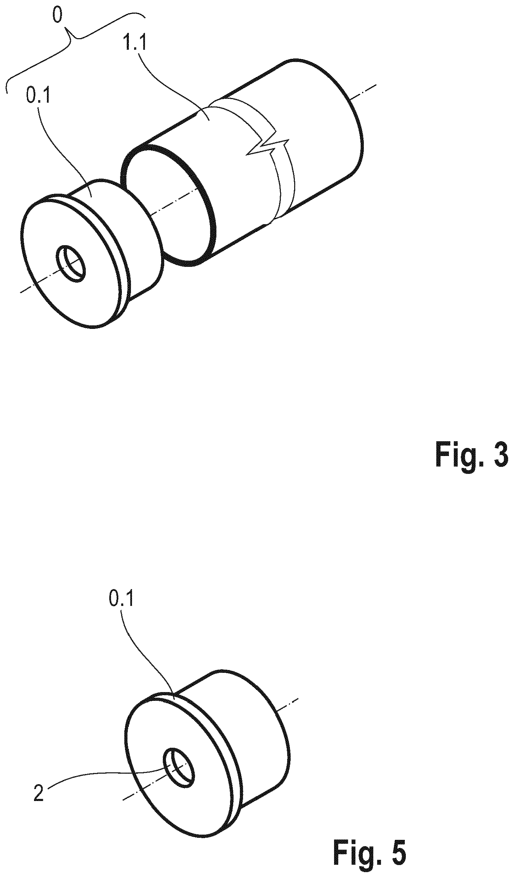

Das Lüfterrohr 1.1 wird mit den Lüfterbauteilen 1.2.x zu einer Lüftereinheit 1 komplettiert, wie in **Fig. 2** gezeigt. Alternativ wird, wie in **Fig. 3** gezeigt, das Lüfterrohr 1.1 mit der ein- oder angesetzten Simulationsblende 0.1 zu einem Simulator 0 komplettiert, der einen gleichen Strömungswiderstand aufweist, wie die Lüftereinheit 1.

Die Simulationsblende 0.1 weist eine Blendenöffnung auf, welche eine permanente Öffnung 2 oder eine Sollöffnung 3 im geöffneten Zustand ist. Abhängig von der Größe des Querschnittes der Blendenöffnung bildet die mit dem Lüfterrohr 1.1 verbundene Simulationsblende 0.1 einen Strömungswiderstand, der den Strömungswiderstand der alternativ eingesetzten Lüfterbauteile 1.2.x simuliert. Als Blendenöffnung soll auch eine Summe von Teilöffnungen verstanden werden. Die Summe der Größen der Querschnitte der Teilöffnungen bildet dann die Größe der Blendenöffnung. Zu unterschiedlich dimensionierten oder nicht baugleichen Lüftereinheiten 1 gehört entsprechend jeweils eine Simulationsblende 0.1 mit einer anderen Größe der Blendenöffnung, es sei denn die Größe der Blendenöffnung ist veränderbar.

Durch die Simulation des Strömungswiderstandes der Lüftereinheit 1, der bevorzugt anhand vergegenständlichter Lüftereinheiten 1 gemessen wird und allein über die Größe der Blendenöffnung in der Simulationsblende 0.1 hergestellt wird, wird eine sehr einfache Lösung geschaffen, mit der die aus dem Stand der Technik bekannte A-Messung quasi bereits vor dem Einsetzen der Lüfterbauteile 1.2.x in die Lüfterrohre 1.1 der Lüftereinheit 1 durchgeführt werden kann, sobald die Lüfterrohre 1.1 in die Wände des Gebäudes bzw. Wandeinbaumodule 4 mit integriertem Lüfterrohr 1.1, wie in **Fig. 4** gezeigt, oder Wandeinbaumodule 4 mit einem rohrförmigen Durchbruch, der das Lüfterrohr 1.1 bildet, verbaut wurden.

Vor der Durchführung der Messungen wird die Simulationsblende 0.1 (in den Ausführungsbeispielen als Deckel ausgeführt) an eines von zwei Rohrenden 1.1.1 des Lüfterrohres 1.1 an- oder in das Lüfterrohr 1.1 dichtend eingesetzt. Die Blendenöffnung in der Simulationsblende 0.1 ist entweder eine permanente Öffnung 2 oder eine Sollöffnung 3, in einem geöffneten Zustand. Die Umfangsform der Blendenöffnung ist unerheblich. Auch kann insbesondere die permanente Öffnung 2, aber auch die Sollöffnung 3 durch mehrere Teilöffnungen bzw. Teilsollöffnungen gebildet sein, das heißt die permanente Öffnung 2 bzw. Sollöffnung 3 muss nicht in sich geschlossen sein.

Wird die Simulationsblende 0.1 mit einer permanenten Öffnung 2 ausgeführt, wie als erstes Ausführungsbeispiel in **Fig. 5** dargestellt, kann sie nur für Messungen verwendet werden, die quasi einer A-Messung entsprechen. In diesem Falle würde man, sofern auch eine Messung durchgeführt werden soll, wie sie einleitend als B-Messung beschrieben wurde, das Lüfterrohr 1.1 unter Verwendung von herkömmlichen Mitteln abdichten.

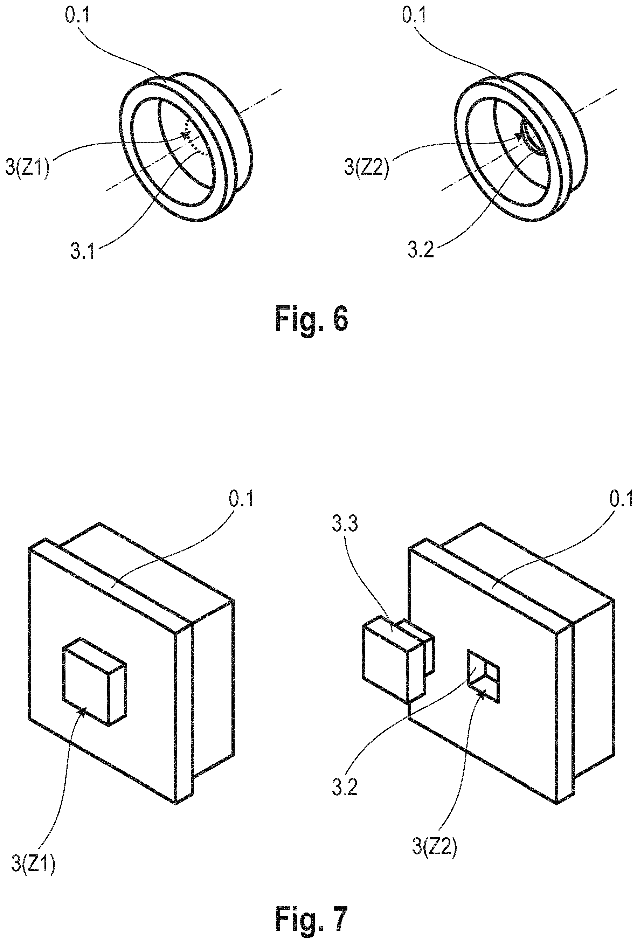

Wird die Simulationsblende 0.1 mit einer Sollöffnung 3 ausgeführt, so kann diese in zwei Zuständen, gezeigt in den **Fig. 6 und 7**, verwendet werden. In einem ersten Zustand Z1, in dem die Sollöffnung 3 verschlossen ist, kann eine B-Messung, z. B. baubegleitend, durchgeführt werden. In einem zweiten Zustand Z2, in dem die Sollöffnung 3 geöffnet ist, kann quasi eine A-Messung durchgeführt werden, zur Gewinnung der Kenngrößen zur energetischen Berechnung und Bewertung des Gebäudes.

Für eine Simulationsblende 0.1 mit einer Sollöffnung 3 werden nachfolgend vorteilhafte Ausführungsbeispiele angegeben.

Gemäß einem zweiten Ausführungsbeispiel ist die Simulationsblende 0.1 entlang einer den Umfang der Sollöffnung 3 beschreibenden Sollbruchlinie 3.1 geschwächt, wobei die Sollbruchlinie 3.1 z. B. eine die Simulationsblende 0.1 nicht vollständig durchdringende Perforationslinie ist. In **Fig. 6** ist eine solche Simulationsblende 0.1 in den beiden Zuständen Z1, Z2 gezeigt. Die Simulationsblende 0.1 wird durch Brechen der Sollbruchlinie 3.1 geöffnet, womit sie zum Abdichten des Lüfterrohres 1.1 zum Zwecke einer B-Messung nur einmal verwendbar ist. Ein solche Simulationsblende 0.1 kann auch durch eine robuste Folie gebildet werden, die z. B. um eines der zwei Rohrenden 1.1.1 gespannt oder geklebt wird.

Gemäß einem dritten Ausführungsbeispiel, dargestellt in **Fig. 7****,** ist die Sollöffnung 3 in der Simulationsblende 0.1 durch eine temporäre Öffnung 3.2 und einen die temporäre Öffnung 3.2 freigebenden oder verschließenden Verschlussdeckel 3.3 gebildet, womit die Simulationsblende 0.1 mehrfach sowohl zum Abdichten als auch zum Simulieren verwendet werden kann.

Gemäß weiteren, in den Zeichnungen nicht dargestellten Ausführungsbeispielen wird die Sollöffnung 3 durch eine zu öffnende und vollständig schließbare Irisblende, einen verstellbaren Schieber oder einen Lochrevolver gebildet, womit die Simulationsblende 0.1 mehrfach und zur Simulation verschiedener, nicht baugleicher Lüftereinheiten 1 zum Abdichten und Simulieren verwendet werden kann.

Auch kann die Simulationsblende 0.1 vorteilhaft aus einer Deckelplatte und einem darunter angeordneten Deckelrahmen gebildet sein, wobei die Blendenöffnung durch einen Spalt zwischen der Deckelplatte und dem Deckelrahmen, der an dem Lüfterrohr 1.1 angebracht werden kann, gebildet ist. Die Spaltbreite ist fest und somit zur Simulation genau einer Lüftereinheit 1 geeignet oder sie ist stufenweise verstellbar, womit sie über die Einstellung der verschiedenen Stufenabstände zur Simulation verschiedener nicht baugleicher Lüftereinheiten 1 geeignet ist.

Ein Vorteil jeder der aufgezeigten Ausführungen der Simulationsblende 0.1 liegt darin, dass sie allein über die Auswahl der geometrischen Umfangsform, der Umfangsgröße und der Größe der Blendenöffnung zur Simulation des Strömungswiderstandes verschiedener nicht baugleicher bzw. nicht gleichdimensionierter Lüftereinheiten 1 herstellbar ist.

Die Simulationsblende 0.1 kann bevorzugt aus einem Kunststoff hergestellt sein, der die Herstellung durch ein formgebendes Verfahren, welches für eine Massenproduktion geeignet ist, ermöglicht. Vorteilhaft kann sie einen oder mehrere Dichtringe oder Dichtlippen aufweisen, über die sie straff sitzend am Lüfterrohr 1.1 angebracht werden kann. Die Simulationsblende 0.1 kann dann für Messungen bei Unterdruck und bei Überdruck an einem gleichen Rohrende 1.1.1 angebracht sein. Nimmt man den Aufwand in Kauf, die Simulationsblende 0.1 für die Messung bei Überdruck bzw. Unterdruck jeweils an einem anderen Rohrende 1.1.1 zu positionieren, kann auf einen straffen und damit dichten Sitz der Simulationsblende 0.1 am Rohrende 1.1.1 verzichtet werden. Die Simulationsblende 0.1 wird dann jeweils so positioniert, dass der auf die Simulationsblende 0.1 in Richtung des Lüfterrohres 1 wirkende Druck immer ein Überdruck ist, mit dem die Simulationsblende 0.1 kraftschlüssig an dem Rohrende 1.1.1 dicht anliegt.

### Bezugszeichenliste

- 0: Simulator
- 0.1: Simulationsblende
- 1: Lüftereinheit
- 1.1: Lüfterrohr
- 1.1.1: Rohrende des Lüfterrohres 1.1
- 1.2.x: Lüfterbauteile
- 1.2.1: Ventilator
- 1.2.2: Wärmespeicher
- 1.2.3: Innenblende
- 1.2.4: Wetterschutzhaube
- 2: permanente Öffnung
- 3: Sollöffnung
- 3.1: Sollbruchlinie
- 3.2: temporäre Öffnung
- 3.3: Verschlussdeckel
- 4: Wandeinbaumodul

- Z1: erster Zustand der Simulationsblende 0.1
- Z2: zweiter Zustand der Simulationsblende 0.1

## Patentansprüche

1. Lüfter-Set, enthaltend ein Lüfterrohr (1.1), mehrere Lüfterbauteile (1.2.x), die in das leere Lüfterrohr (1.1) eingesetzt oder an dem Lüfterrohr (1.1) angesetzt werden können, um mit dem Lüfterrohr (1.1) eine Lüftereinheit (1) zu bilden, und eine Simulationsblende (0.1) mit einer Blendenöffnung, die alternativ in das leere Lüfterrohr (1.1) eingesetzt oder an dem Lüfterrohr (1.1) angesetzt werden kann, um mit dem Lüfterrohr (1.1) einen Simulator (0) zu bilden, wobei ein so gebildeter Simulator (0) einen gleichen Strömungswiderstand für eine hindurchtretende Strömung aufweist, wie eine so gebildete Lüftereinheit (1).

2. Lüfter-Set nach Anspruch 1, **dadurch gekennzeichnet,**
**dass** die Blendenöffnung der Simulationsblende (0.1) eine permanente Öffnung (2) ist.

3. Lüfter-Set nach Anspruch 1, **dadurch gekennzeichnet,**
**dass** die Blendenöffnung der Simulationsblende (0.1) eine in einem zweiten Zustand (Z2) der Simulationsblende (0.1) geöffnete Sollöffnung (3) ist, die in einem ersten Zustand (Z1) der Simulationsblende (0.1) geschlossen ist, sodass die Simulationsblende (0.1) außer zur Simulation auch zum Abdichten des Lüfterrohres (1.1) verwendet werden kann.

4. Lüfter-Set nach Anspruch 3, **dadurch gekennzeichnet,**
**dass** die Sollöffnung (3) durch eine den Umfang der Sollöffnung (3) beschreibende Sollbruchlinie (3.1) gebildet ist, die durch Brechen geöffnet werden kann, womit die Simulationsblende (0.1) zum Abdichten nur einmal verwendbar ist.

5. Lüfter-Set nach Anspruch 3, **dadurch gekennzeichnet,**
**dass** die Sollöffnung (3) durch eine temporäre Öffnung (3.2) und einen Verschlussdeckel (3.3) gebildet ist, womit die Simulationsblende (0.1) mehrfach zum Abdichten und zum Simulieren verwendet werden kann.

6. Lüfter-Set nach Anspruch 1, **dadurch gekennzeichnet,**
**dass** die Blendenöffnung der Simulationsblende (0.1) durch eine in ihrer Größe verstellbare Öffnungsblende oder einen Lochrevolver gebildet ist, womit die Simulationsblende (0.1) auch zum Simulieren anderer nicht baugleicher oder verschieden dimensionierter Lüftereinheiten (1) gemäß Anspruch 1 verwendet werden kann.

7. Lüfter-Set nach Anspruch 1, **dadurch gekennzeichnet,**
**dass** es zusätzlich ein Wandeinbaumodul (4) enthält, in dem das Lüfterrohr (1.1) integrierbar oder integriert ist.

8. Lüfter-Set nach Anspruch 1, **dadurch gekennzeichnet,**
**dass** das Lüfter-Set ein Wandeinbaumodul (4) beinhaltet und das Lüfterrohr (1.1) ein rohrförmiger Durchbruch in dem Wandeinbaumodul (4) ist.

9. Verwendung eines Lüfter-Sets nach einem der Ansprüche 1 bis 8 zur alternativen Bildung der Lüftereinheit (1), aus dem Lüfterrohr (1.1) und den Lüfterbauteilen (1.2.x), oder des Simulators (0), aus dem Lüfterrohr (1.1) und der Simulationsblende (0.1).

10. Verfahren zur Dichtheitsmessung eines Gebäudes in verschiedenen Bauzuständen, bei dem in einem Gebäude über eine vorgegebene Zeit ein vorgegebener Überdruck oder Unterdruck erzeugt wird, der sich dabei einstellende Luftvolumenstrom aus dem Gebäude oder in das Gebäude gemessen wird und aus dem gemessenen Luftvolumenstrom ein Dichtheitswert für das Gebäude in dem jeweiligen Bauzustand abgeleitet wird,
**dadurch gekennzeichnet,**
**dass** in dem Gebäude eingebaute Lüfterrohre (1.1), bevor sie jeweils mit Lüfterbauteilen (1.2.x) zu einer Lüftereinheit (1) komplettiert werden, vorübergehend mit einer Simulationsblende (0.1) zu einem Simulator (0) komplettiert werden, der einen gleichen Strömungswiderstand für einen hindurchtretenden Luftvolumenstrom aufweist, wie die Lüftereinheit (1), womit in verschiedenen Bauzuständen, in denen eine Dichtheitsmessung durchgeführt wird, der durch die Lüfterrohre (1.1) hindurchtretende Luftvolumenstrom gleich ist.

## Claims

1. A ventilator set comprising a ventilation duct (1.1), a plurality of ventilator components (1.2.x) which can be inserted into the empty ventilation duct (1.1) or attached to the ventilation duct (1.1) to form a ventilator unit (1) with the ventilation duct (1.1), and a simulation cover (0.1) with a cover opening, which can alternatively be inserted into the empty ventilation duct (1. 1) or attached to the ventilation duct (1.1) in order to form a simulator (0) with the ventilation duct (1.1), wherein a simulator (0) formed in this way has the same flow resistance for a flow passing through it as a ventilator unit (1) formed in this way.

2. The ventilator set according to claim 1, **characterised in that**
the cover opening of the simulation cover (0.1) is a permanent opening (2).

3. The ventilator set according to claim 1, **characterised in that**
the cover opening of the simulation cover (0.1) is a desired opening (3) which is open in a second state (Z2) of the simulation cover (0.1) and is closed in a first state (Z1) of the simulation cover (0.1), so that the simulation cover (0.1) can be used not only for simulation but also for sealing the ventilation duct (1.1).

4. The ventilator set according to claim 3, **characterised in that**
the desired opening (3) is formed by a predetermined breaking line (3.1) which describes the circumference of the desired opening (3) and which can be opened by breaking, allowing the simulation cover (0.1) to be used only once for sealing.

5. The ventilator set according to claim 3, **characterised in that**
the desired opening (3) is formed by a temporary opening (3.2) and a cap (3.3), allowing the simulation cover (0.1) to be used several times for sealing and for simulation.

6. The ventilator set according to claim 1, **characterised in that**
the cover opening of the simulation cover (0.1) is formed by a size-adjustable aperture stop or a perforated turret, allowing the simulation cover (0.1) to be used also to simulate other ventilator units (1) according to claim 1 which are not identical in construction or have different dimensions.

7. The ventilator set according to claim 1, **characterised in that**
it additionally contains a wall installation module (4) in which the ventilation duct (1.1) can be integrated or is integrated.

8. The ventilator set according to claim 1, **characterised in that**
the ventilator set includes a wall installation module (4) and the ventilation duct (1.1) is a tubular breakthrough in the wall installation module (4).

9. Use of a ventilator set according to any one of claims 1 to 8 for alternatively forming the ventilator unit (1), from the ventilation duct (1.1) and the ventilator components (1.2.x), or the simulator (0), from the ventilation duct (1.1) and the simulation cover (0.1).

10. A method for measuring the tightness of a building in various construction states,
wherein a predetermined overpressure or underpressure is generated in a building over a predetermined time, the resulting air volume flow out of the building or into the building is measured and a tightness value for the building in the respective construction state is derived from the measured air volume flow,
**characterised in that**,
before respectively being completed with ventilator components (1.2.x) to form a ventilator unit (1), ventilation ducts (1.1) installed in the building are temporarily completed with a simulation cover (0.1) to form a simulator (0) which has the same flow resistance for a passing air volume flow as the ventilator unit (1), so that in different construction states in which a tightness measurement is carried out, the air volume flow passing through the ventilation ducts (1.1) is the same.

## Revendications

1. Ensemble de ventilateur comprenant un tuyau de ventilateur (1.1), une pluralité de composants de ventilateur (1.2.x) qui peuvent être insérés dans le tuyau de ventilateur vide (1.1) ou fixés au tuyau de ventilateur (1.1) pour former une unité de ventilateur (1) avec le tuyau de ventilateur (1.1), et un obturateur de simulation (0.1) ayant une ouverture d'obturateur qui peut alternativement être inséré dans le tuyau de ventilateur vide (1.1) ou peut être fixé au tuyau de ventilateur (1.1) afin de former un simulateur (0) avec le tuyau de ventilateur (1.1), dans lequel un simulateur (0) formé de cette manière a la même résistance à l'écoulement pour un écoulement le traversant qu'une unité de ventilateur (1) formée de cette manière.

2. Ensemble de ventilateur selon la revendication 1, **caractérisé en ce que** l'ouverture de l'obturateur de simulation (0.1) est une ouverture permanente (2).

3. Ensemble de ventilateur selon la revendication 1, **caractérisé en ce que** l'ouverture de l'obturateur de simulation (0.1) est une ouverture prévue (3) qui est ouverte dans un deuxième état (Z2) de l'obturateur de simulation (0.1) et est fermée dans un premier état (Z1) de l'obturateur de simulation (0.1), de sorte que l'obturateur de simulation (0.1) peut être utilisé non seulement pour la simulation mais aussi pour l'étanchement du tuyau de ventilateur (1.1).

4. Ensemble de ventilateur selon la revendication 3, **caractérisé en ce que** l'ouverture prévue (3) est formée par une ligne de rupture prévue (3.1) qui définit la circonférence de l'ouverture prévue (3) et qui peut être ouverte par rupture, l'obturateur de simulation (0.1) ne pouvant être utilisé, par conséquent, qu'une seule fois pour l'étanchement.

5. Ensemble de ventilateur selon la revendication 3, **caractérisé en ce que** l'ouverture prévue (3) est formée par une ouverture temporaire (3.2) et un couvercle (3.3), l'obturateur de simulation (0.1) pouvant être utilisé, par conséquent, plusieurs fois pour l'étanchement et pour la simulation.

6. Ensemble de ventilateur selon la revendication 1, **caractérisé en ce que** l'ouverture de l'obturateur de simulation (0.1) est formé par un diaphragme d'ouverture réglable en taille ou une tourelle perforée, l'obturateur de simulation (0.1) pouvant également être utilisé pour simuler d'autres unités de ventilateur (1) selon la revendication 1 qui ne sont pas de construction identique ou qui ont des dimensions différentes.

7. Ensemble de ventilateur selon la revendication 1, **caractérisé en ce qu'**il contient en outre une unité pour montage mural (4) dans laquelle le tuyau de ventilateur (1.1) peut être intégré ou est intégré.

8. Ensemble de ventilateur selon la revendication 1, **caractérisé en ce que** l'ensemble de ventilateur comprend une unité pour montage mural (4) et le tuyau de ventilateur (1.1) est une ouverture tubulaire dans l'unité pour montage mural (4).

9. Utilisation d'un ensemble de ventilateur selon l'une quelconque des revendications 1 à 8 pour former alternativement l'unité de ventilateur (1), à partir du tuyau de ventilateur (1.1) et des composants de ventilateur (1.2.x), ou le simulateur (0), à partir du tuyau de ventilateur (1.1) et de l'obturateur de simulation (0.1).

10. Procédé de mesure de l'étanchement d'un bâtiment dans différents états de construction, dans lequel une surpression ou dépression prédéterminée est générée dans un bâtiment pendant un temps prédéterminé, le débit volumique d'air résultant hors du bâtiment ou vers l'intérieur du bâtiment est mesuré et une valeur d'étanchement pour le bâtiment dans l'état de construction respectif est déduite du débit volumique d'air mesuré,
**caractérisé en ce que**
des tuyaux de ventilateur (1.1) installés dans le bâtiment, avant d'être respectivement complétés par des composants de ventilateur (1.2.x) pour former une unité de ventilateur (1), sont temporairement complétés par un obturateur de simulation (0.1) pour former un simulateur (0) qui a la même résistance à l'écoulement pour un débit volumique d'air passant que l'unité de ventilateur (1), moyennant quoi dans différents états de construction dans lesquels une mesure d'étanchement est effectuée, le débit volumique d'air traversant les tuyaux de ventilateur (1.1) est le même.
